# EUROPEAN PATENT APPLICATION

(11) **EP 3 567 687 A1**
(43) Date of publication of application: **13.11.2019**
(21) Application number: 19425033.8
(22) Date of filing: 07.05.2019
(51) Int. Cl.: H02G 3/22, F16L 5/00

(54) **COUPLING SYSTEM BETWEEN ELECTRICAL, HYDRAULIC, OLEO-DYNAMIC AND PNEUMATIC CONNECTORS AND MODULAR THROUGH-WALL SYSTEMS**

(30) Priority: 07.05.2018 IT 201800005115
(71) Applicant: Overconn S.r.l. a Socio Unico, 41058 Vignola (MO) (IT)
(72) Inventor: Donnini, Sofia, 41058 Vignola (MO) (IT)

(57) **Abstract**

The invention concerns a new tubular connector adapter which enables the insertion of different types of connection - in particular electrical connection - in the through-wall grommet systems currently in use. Moreover the insertion occurs directly in the rubber supports of the systems themselves.

## Description

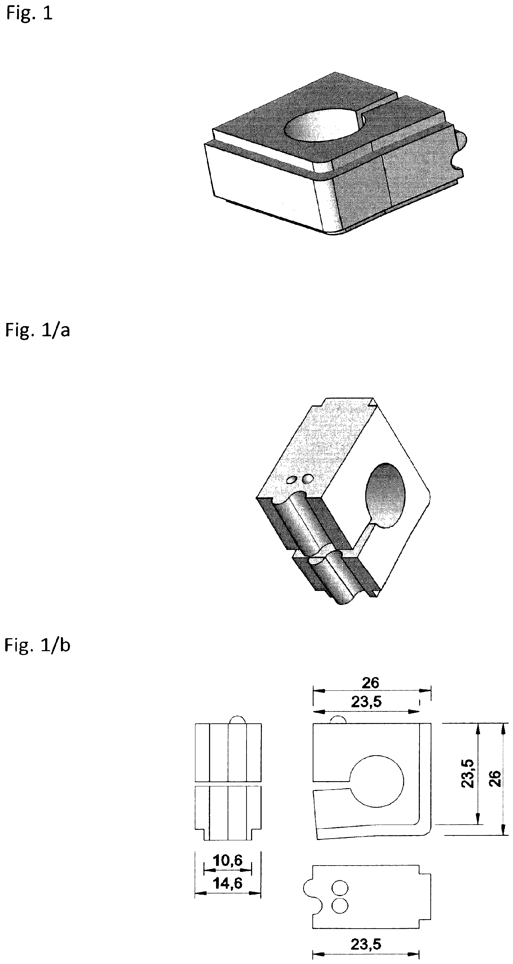

In the field of industrial electrical connections, rubber modular structures with a generally plastic frame are used to enable the passage of electrical cables (with or without connectors) through walls in electric panels and/or parts of industrial machines.
They are commonly referred to as "through-wall systems". The module which tightens the cable and ensures its liquid- and dust-tightness is known as "grommet" (Fig. 1).

The description of the discovery concerns the realization of a new coupling systems of electrical connectors - or other fields - of different type and size, in the standard through-wall and grommets systems.

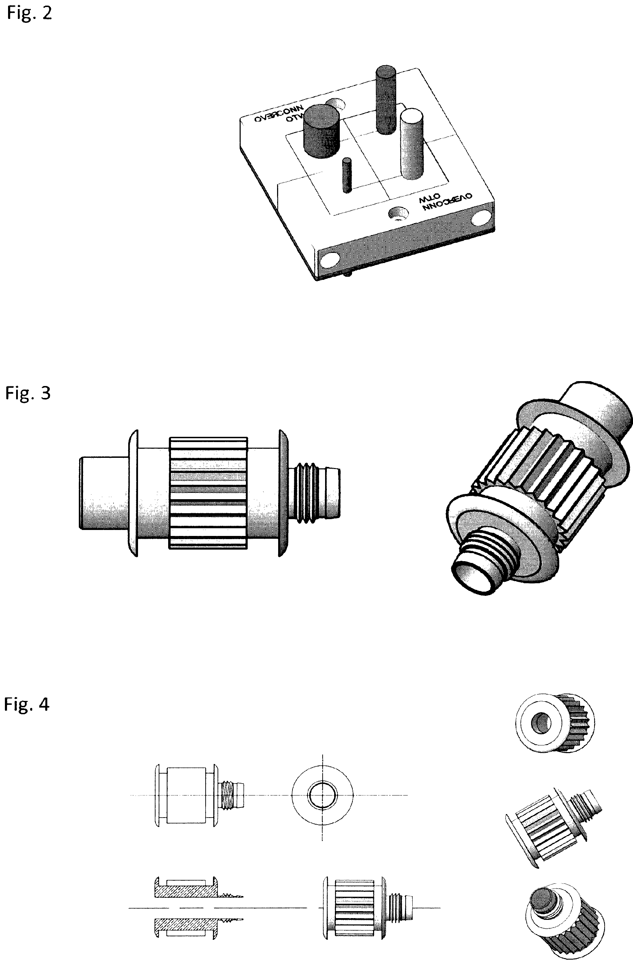

There are different types of grommets and through-wall systems characterized by the presence of tight grommets with holes whose dimension corresponds to the cables (see Fig.1 and 2); and in such systems circular and/or rectangular, moulded and/or wired connectors are connected with the aforesaid cables. Given that, the discovery aims to enable the connection directly on the grommet, to avoid further passages of cables and cabling.

This feature has been realized through the use of an innovative device, made of a tubular body of metal-preferably aluminum, nickel brass or steel, or other materials/technological manufacture, whose dimensions can fit the grommets-holes of the various through-wall systems-, and which includes various types of manufacture processes and/or fixing systems, for example resin and specific glues for connectors, that are not subject of the patent, with a resistance function to rotation and traction, while the possible rotation of the connector inside the tubular body is blocked by the insertion of the external connector, as well as by the potential glueing of the connector aiming to a waterproof seal. Let's remind that the standard insertion of every kind of connector requires the tightening with threaded ferrules or ultra lock twitch.

Also the jacks of the electrical contacts, by ensuring the continuity of the electricity transfer, prevent the rotation of the internal connector, which, moreover, is not subject to torsional forces, just because the threaded ferrules have a strong grip on the tubular body, making it capable to ensure the resistance to rotation.

The tubular body can be realized in different sizes and diameters, according to the connectors currently in use.

The goal of this invention is to create a connection system such as the one described above, where the coupling of the connectors takes place directly on the wall of the throughwall system, without further cable extension or connectors deferment. In this way any additional wiring and/or dispersive operation can be avoided.

This peculiar feature offers the opportunity to create a new throughwall-cables assembling-system, with a brand new coupling system that ensures the absence of cables coming-out of the wall, avoiding any further wiring and achieving substantial benefits in many ways: waterproof seal, system rationality, assembly-speed, economic efficiency, know-how, product finish and functional aesthetic.

A further and particularly important goal of the invention is the possibility to achieve a coupling connection system, which is not more complex than the standards we have today in terms of costs and processing time.

Another important goal of the invention is the realization of a through-wall system with connections of compact dimensions.

A further and particularly important goal of the invention is the possibility to achieve a real modular system, which is just based on the fixing system of the connector to the wall, instead of involving the countless standard we have today, obtaining a higher application-safety than the one granted by the traditional connector fixing systems made by the combination of thread and locknut.

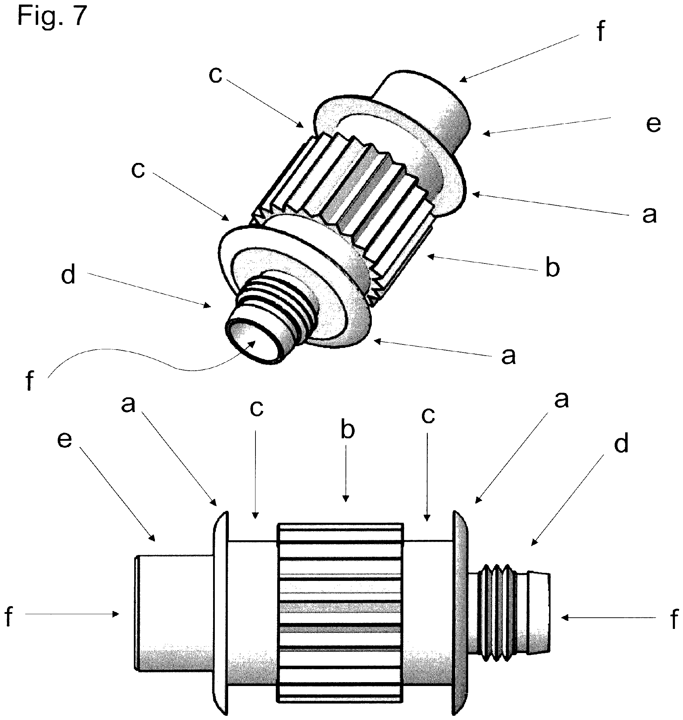

In order to achieve these goals, the invention is based on a coupling system of connectors with all the characteristics indicated at the beginning of the present description, and characterized by the system in the Fig.7.

Such system can be realized in three versions: MALE (fig. 4), FEMALE (fig. 5) and THROUGH-WALL (MALE-FEMALE) (fig. 6).

The coupling system in this example (M12 male/female) consists of the following parts (fig. 7):
a) Lateral grip wall
b) Anti-rotation machining, in this example case with a pyramid-shaped coaxial ring section
c) Variable length section - it varies according to the grommet section
d) Out-or-in connector part
e) In-or-out connector part
f) Insertion hole of the connector body

Lateral grip walls a), thanks to their external convex and their internal flat shape and to the border height, greater as compared to the grommet hole, aim at impeding the movement of the tubular body with respect to the grommet; in particular, at preventing its movement on the longitudinal axis in case of strong push or traction during the coupling.

If the lateral sealing walls serve to counter the longitudinal thrusts, the processing, in this example case of the classic pyramidal type b), of the central walls of the tubular element allows to counteract the thrusts of rotation of the tubular body itself, guaranteeing its perfect coaxial stability and above all the perfect seal of the grommet on the tubular body, with important benefits in terms of sealing with liquids and powders.

Other anti-rotation systems can be used, from Knurling to resining by means of specific glues.
The variable-length section c), with a size and length range covered by the measures of 14, 18,5 and 30 mm, enables the system to adapt to the standard measures of the grommets made available on the market through the many manufacturers of this field.

The parts illustrated in figures e) and d) contain standard connector bodies that come in and out. They can be shaped so that they can accommodate any type of electrical connector currently in use, like M5, M8, M9, M12, M16, M17, M23, 7/8", MIL Standard, RJ45, USB, others of similar type and even nozzles and hydraulic, oleo-dynamic and/or pneumatic interchange inserts.

Types, materials and shapes of containers and connectors themselves can vary according to the need: they can, for example, have internal and external threads according to the type of connector to use, as it can be seen in the Fig. 7 letter d.

Letter f) refers to the hollow tubular body to indicate the accommodation of the connector/ above mentioned inserts. The cavity can potentially include internal threads according to the connector to insert. The connector body, or any electrical, hydraulic, oleo-dynamic or pneumatic connecting and/or inserting tool, is locked through high-tight glues and resins or through moulding - directly on the tubular body. This system, largely and generally used for the use of electrical connectors in metal bodies for different purposes, ensures an excellent IP water- and dust-tightness without affecting the mechanical seal: it is guaranteed by the screwing threads of connectors.

As a result, the connector is required to support a limited mechanical pressure due to the insertion of the connections, while general tightness is guaranteed by the coupled metal bodies through threads and rings.

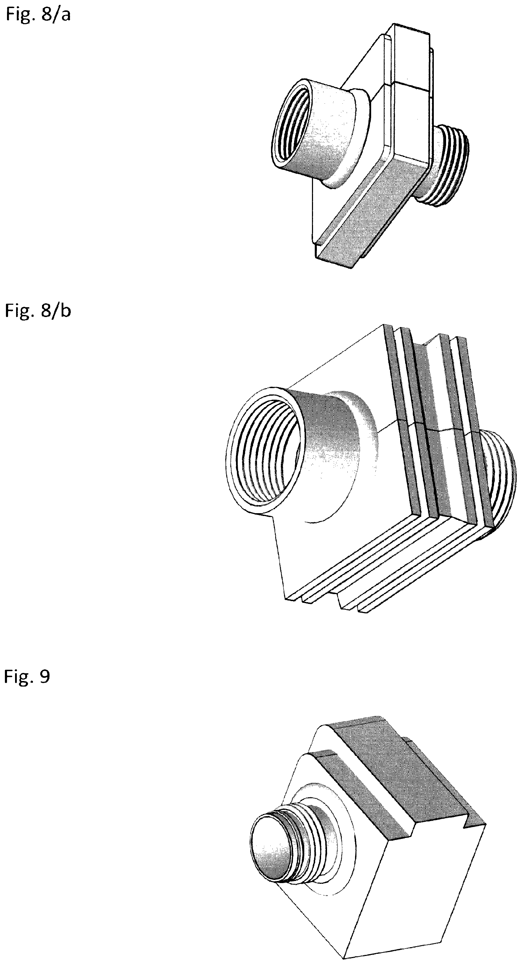

In the Fig. 8/a it is illustrated the insertion of the tubular body of the system, subject of the invention, in an example of grommet system. In the Fig. 8/b there is an example of insertion in a different type of grommet.

Notwithstanding the main principle of the invention, the detail construction and implementation methods can largely vary as compared to the examples. It does not mean getting out the present invention, which concerns the direct application of connectors on walls of grommets in through-wall systems currently in use.
In the Fig. 9 there is an example of a grommet moulded directly on the tubular body.

### KEY

Fig. 1 Example of through-wall tight grommet with central hole
Fig. 1/a Example of through-wall tight grommet with central hole, side view
Fig. 1/b Example of through-wall tight grommet with central hole with quotes.
Fig. 2 Example of through-wall assembled system with rubber side-plate
Fig. 3 Example of coupling system.
Fig. 4 Example of MALE through-wall coupling system.

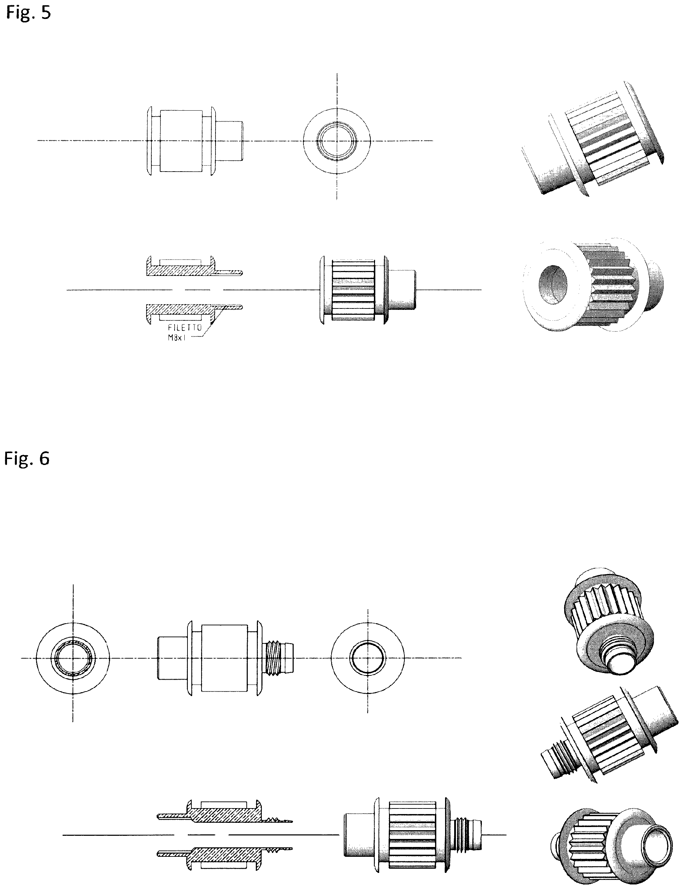

Fig. 5 Example of FEMALE through-wall coupling system.
Fig. 6 Example of MALE/FEMALE through-wall coupling system.
Fig. 7 Explanatory drawing of the components of the coupling system.
Fig. 8/a Example of through-wall coupling system, inserted in a standard grommet.
Fig. 8/b Example of through-wall coupling system, inserted in a different type of grommet.
Fig. 9 Example of a grommet moulded directly on the coupling system.

## Claims

1. Coupling system for electrical connectors and through-wall grommet tubular structures, **characterized in that** it consists of a tubular structure - made of metal, plastic, ceramics or other materials - provided with lateral seals and a retainer ring that prevents the coaxial rotation of the tubular structure; or with a heat or cold moulded grommet, or moulded directly on the tubolar structure through other technologies.

2. The coupling system according to claim 1, **characterized in that** it is offered in configurations based on only male or only female or male/female connectors (fig.4, fig.5 e fig.6).

3. The coupling system according to claim 1, which is **characterized in that** it supports, in all its possible configurations, every type of electrical connectors currently in use, like M5, M8, M9, M12, M16, M17, M23, M40, 7/8", MIL standard, RJ45, USB and future developments of old and new standards.

4. The coupling system according to claims 1 and following, **characterized in that** it can be inserted in all types of plastic through-wall grommets currently in use and is covered in the current 14 mm, 18,5 mm, 30 mm standards of depth and every future development in terms of height, width and depth.

5. The coupling system according to claims 1 and following, **characterized in that** it can be used not only in the electrical sector, but also in hydraulic, oleo-dynamic, pneumatic sectors; in general, it can work in all the sectors in which you want to pass through walls by means of a modular through-wall system based on drilled grommets (fig. 1).
